# EUROPÄISCHE PATENTSCHRIFT

(11) **EP 0 634 636 B1**
(45) Veröffentlichungstag und Bekanntmachung des Hinweises auf die Patenterteilung: **06.10.1999**
(21) Anmeldenummer: 94110525.6
(22) Anmeldetag: 06.07.1994
(51) Int. Cl.: G01J 3/453

(54) **Interferometer nach Michelson**
Michelson-type interferometer
Interféromètre de Michelson

(30) Priorität: 07.07.1993 DE 4322682; 07.07.1993 DE 4322683; 07.07.1993 DE 4322687
(43) Veröffentlichungstag der Anmeldung: 18.01.1995
(73) Patentinhaber: Deutsches Zentrum für Luft- und Raumfahrt e.V., 53175 Bonn (DE)
(72) Erfinder: Tank, Volker, Dr., D-82279 Eching (DE); Jansen, Burkhard, D-49176 Hilter (DE); Schneider, Klaus, D-88145 Hergatz (DE); Haschberger, Peter, Dr., D-82131 Gauting (DE); Lindermeier, Erwin, D-86165 Augsburg (DE)
(74) Vertreter: von Kirschbaum, Albrecht, Dipl.-Ing.

(56) Entgegenhaltungen:
- EP-A- 0 468 816
- DE-A- 3 902 591
- DE-A- 3 921 816
- FR-A- 2 252 557

## Beschreibung

Die Erfindung betrifft ein Interferometer nach Michelson, bei welcher eine optische Wegdifferenz durch eine in Rotation versetzbare Spiegeleinheit erzeugt werden kann.

Aus DE 34 31 040 C2, EP 01 46 768A2, DE 40 13 399 C1 sind beispielsweise Michelson-Interfermometer bekannt, bei denen optische Wegdifferenzen durch rotierende Retroreflektoren erzeugt werden. Bei diesen bekannten Interferometern werden exzentrisch und geneigt "nutierende" Retroreflektoren verwendet. Zur Erzeugung größerer optischer Wegdifferenzen, also höherer spektraler Auflösungen, werden zwei oder mehr Retroreflektoren in - bezogen auf die optische Wegänderung in den beiden Interferometerarmen - asynchrone Rotation versetzt, wobei eine feste Phasenbeziehung der verschiedenen Drehbewegungen zueinander eingehalten werden muß.

Diese bekannten Michelson-Interferometer mit rotierenden Retroreflektoren weisen verschiedene Nachteile auf:
1. Zur Erzeugung einer hohen spektralen Auflösung kann ein solches Interferometer nicht nur mit einem Retroreflektor betrieben werden, sondern es sind zwei oder mehr dieser relativ teuren Elemente erforderlich.
2. Zu der erforderlichen Einhaltung der festen Phasenbeziehung der verschiedenen Drehbewegungen der zwei oder mehr Retroreflektoren zueinander müssen aufwendige Maßnahmen getroffen werden. Eine elegante Lösung wäre der Antrieb jedes Retroreflektors mit einem eigenen Schrittschaltmotor und die "elektronische Kopplung" aller Motoren untereinander mittels nur eines gemeinsamen Steuertakts für alle Motoren. Die mechanischen Vibrationen durch den Schrittbetrieb der verschiedenen Schrittschaltmotore übertragen sich auf den gesamten Aufbau in einer für das Meßsignal störenden Weise und müssen daher durch zusätzliche aufwendige, mechanische Dämpfungsmaßnahmen behoben werden. Ferner würde der gesamte Aufwand durch jeden zusätzlichen notwendigen Antriebsmotor erhöht. Obendrein sind Schrittschaltmotore grundsätzlich teuerer als vergleichbare Gleichspannungsmotore, welche für den Betrieb mit nur einem Retroreflektor ausreichen.
   Sollten zwei oder mehr Retroreflektoren von nur einem Motor angetrieben werden, so ist eine Kopplung über ein Getriebe erforderlich. Dadurch wird ebenfalls wieder der Aufwand größer und es kommen zusätzliche Störquellen durch Getriebespiel und -vibration in den Aufbau.
3. Obendrein ist als besonders nachteilig anzusehen, daß durch jeden weiteren Reflektor dessen optische Fehler eine zusätzliche Verschlechterung der Qualität des optischen Signals des Geräts bewirken. Zur Vermeidung dieses Nachteils können Retroreflektoren extrem hoher Güte verwendet werden, was aber wiederum ein extrem teures Gerät zur Folge hätte.
4. Bei den bekannten Interferometern mit nur einem rotierenden Retroreflektor ist darüber hinaus nachteilig, daß zur vermeidung unerwünscht großer, mechanischer Dimensionen des Geräts auch im zweiten Interferometerarm ein allerdings fester Retroreflektor installiert ist, der vor allem dazu dient, den optischen Weg zu falten, und um dadurch geringe mechanische Baugrößen zu ermöglichen. Dadurch ergeben sich die bereits vorstehend beschriebenen Nachteile eines zweiten Reflektors.
5. Nachteilig bei dem bekannten Interferometer mit nur einem rotierenden Retroreflektor, über welchen beide Interferometerarme laufen, ist ferner, daß bei einer sehr hohen spektralen Auflösung ein sehr großer Retroreflektor erforderlich ist, der zu unerwünscht großen mechanischen Dimensionen des Geräts führt und hohe Fertigungskosten zur Folge hat.

Ferner ist aus DE 24 56 649 A1 eine Vorrichtung zur Messung eines Drehwinkels einer Welle mit Hilfe eines Interferometers bekannt. Dieses bekannte Interferometer weist neben einem Strahlteiler, einer Sammellinse, einem Detektor zum Erfassen der Signalstrahlung, zwei Planspiegel und einer Strahlungsquelle ein durch eine Antriebseinheit in Rotation versetzbare Spiegeleinheit auf, bei welchem zwei einander in einem vorgegebenen Abstand gegenüberliegende Spiegelflächen vorgesehen sind, von welchen die näher beim Strahlteiler befindliche Spiegelfläche in Form eines Rings ausgbildet ist, und über welches beide vom Strahlteiler kommenden Strahlhälften gelenkt werden. Ferner ist eine Drehachse der Antriebseinheit in derselben Ebene wie der Strahlteiler ausgerichtet, und eine Senkrechte auf die Drehachse schließt mit einer Spiegelfläche einen spitzen Winkel ein; obendrein ist die Antriebseinheit auf der dem Strahlteiler abgewandten Rückseite des Spiegelelements angeordnet. Auch sind die Planspiegel auf verschiedenen, einander gegenüberliegenden Seiten der Drehachse und senkrecht zu vom Strahlteiler kommenden Strahlenbündeln angeordnet.

Der Erfindung liegt daher die Aufgabe zugrunde, ein im Aufbau kompaktes Interferometer nach Michelson mit einem geringen technischen Aufwand und mit einer geringen Störanfälligkeit zu schaffen. Gemäß der Erfindung ist diese Aufgabe bei einem Interferometer nach Michelson durch die Merkmale im kennzeichnenden Teil des Anspruchs 1 gelöst. Vorteilhafte Weiterbildungen der Erfindung sind Gegenstand der auf die Anspruch 1 rückbezogenen Ansprüche.

Bei bevorzugten Ausführungsformen eines erfindungsgemäßen Interferometers, bei welchem die beiden Interferometerarme zwischen zwei parallelen Planspiegeln einer Spiegeleinheit verlaufen, ist ein Paar parallel zueinander angeordneter, runder Planspiegel vorgesehen, welche zur Erzeugung einer Wegdifferenz gemeinsam, aber kontinuierlich, vor allem aber eine Rotationsbewegung ausführen, welche um eine Drehachse erfolgt, welche um einen kleinen Winkel α gegenüber der Senkrechten auf die Spiegelflächen geneigt ist. Durch den Neigungswinkel α sowie durch den Abstand der einander gegenüberliegenden Spiegelflächen der Spiegeleinheit wird die erreichbare Wegdifferenz und die damit erzielbare, spektrale Auflösung bestimmt.

Nachfolgend wird die Erfindung anhand von bevorzugten Ausführungsformen unter Bezugnahme auf die anliegenden Zeichnungen im einzelnen erläutert. Es zeigen:
- Fig.1: eine schematische Darstellung einer ersten Ausführungsform eines erfindungsgemäßen Interferometers mit einer rotierenden Spiegeleinheit aus zwei mit ihren spiegelnden Flächen einander zugewandten Planspiegeln;
- Fig.2: eine schematische Darstellung einer bevorzugten Ausführung einer rotierenden Spiegeleinheit des erfindungsgemäßen Interferometers nach Fig.1, und
- Fig.3: eine schematische Darstellung noch einer weiteren bevorzugten Ausführung einer rotierenden Spiegeleinheit des erfindungsgemäßen Interferometers nach Fig.1.

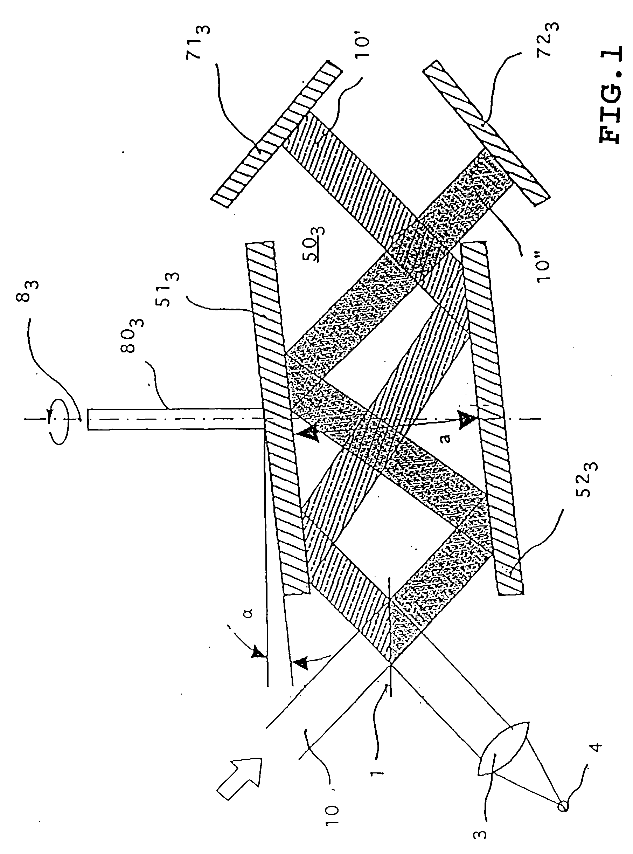

Wie in Fig.1 dargestellt, weist eine erste Ausführungsform eines Interferometers nach Michelson einen Strahlteiler 1, ein optisches Element 3, einen Detektor, eine Spiegeleinheit 50₃ zur Weglängenänderung, die zwei einander zugewandte, parallel zueinander angeordnete Planspiegel 51₃ und 52₃ hat, sowie zwei Planspiegel 71₃ und 72₃ auf. Die beiden Planspiegel 51₃ und 52₃ der Spiegeleinheit sind kreis- oder ellipsenförmige Planspiegel, welche den gleichen Durchmesser haben und, was in Fig.1 nicht näher dargestellt ist, in einem einstellbaren Abstand a voneinander angeordnet und in dieser Stellung fest miteinander verbunden sind. Die durch die Planspiegel 51₃ und 52₃ gebildete Spiegeleinheit 50₃ ist kontinuierlich um eine Drehachse 8₃ in Rotation versetzbar, wobei die Spiegelflächen der beiden Planspiegel 51₃, 52₃ der Spiegeleinheit 50₃ um einen kleinen Winkel α gegenüber der Senkrechten auf die Drehachse 8₃ geneigt sind.

Eine Antriebswelle 8₃, deren Drehachse mit der Drehachse 8₃ zusammenfällt, ist fest mit der Außenseite eines der beiden Planspiegel 51₃ und 52₃ (in Fig.1 mit der Rückseite des Planspiegels 51₃) verbunden und wird über einen nicht näher dargestellten Motor mit konstanter Winkelgeschwindigkeit angetrieben.

Der Strahlteiler 1 ist bezüglich einer (nicht näher angegebenen) Spiegeleinheit-Mittenebene auf einer Seite der Spiegeleinheit 50₃ angeordnet, während die Planspiegel 71₃ und 72₃ auf dessen anderen Seite angeordnet sind. Die StrahlteilerEbene liegt somit zwischen den Planspiegeln 51₃ und 52₃ und halbiert den Winkel, welchen die Planspiegel 71₃ und 52₃ einschließen. Die zu ihren optischen Achsen konzentrischen Strahlenbündel-Hälften 10' und 10" der beiden Interferometerarme treffen senkrecht auf die Planspiegel 71₃ und 72₃ auf.

Während des Betriebs wird ein eintretendes Strahlenbündel 10 vom Strahlteiler 1 durch Transmission bzw. Reflexion in zwei Strahlenbündel-Hälften 10' und 10" gleicher Intensität geteilt. Die Strahlenbündel-Hälfte 10' trifft in der Spiegeleinheit 50₃ auf den Planspiegel 51₃ auf, wird von diesem zum Planspiegel 52₃ und von dort schließlich zum Planspiegel 71₃ reflektiert, so daß sie senkrecht auftrifft. Von dem Planspiegel 71₃ durchläuft die Strahlenbündel-Hälfte 10' den beschriebenen Weg in umgekehrter Richtung bis zum Strahlteiler. Die zweite Strahlenbündel-Hälfte 10" trifft, vom Strahlteiler 1 kommend, in der Spiegeleinheit 50₃ auf den Planspiegel 52₃ auf, wird von diesem zum Planspiegel 51₃ und von dort schließlich zum Planspiegel 72₃ reflektiert, wo die Strahlenbündel-Hälfte 10" senkrecht auftrifft, in sich reflektiert wird und dann den beschriebenen Weg in umgekehrter Richtung zurück zum Strahlteiler 1 durchläuft. Die beiden auf den Strahlteiler 1 auftreffenden Strahlenbündel-Hälften rekombinieren am Strahlteiler 1, und durch das optische Element 3 wird die daraus resultierende Strahlung auf dem Detektor 4 fokussiert.

Bei der Rotation der Spiegeleinheit 50₃ verlängern bzw. verkürzen sich die beschriebenen Wege in den beiden Interferometerarmen gegenläufig, wodurch die gewünschte Wegdifferenz gebildet wird, welche durch die Größe des Winkels α zwischen den Planspiegel-Oberflächen und der Senkrechten auf der Drehachse 8₃ und dem Abstand a zwischen den beiden Planspiegeln 51₃ und 52₃ einstellbar ist.

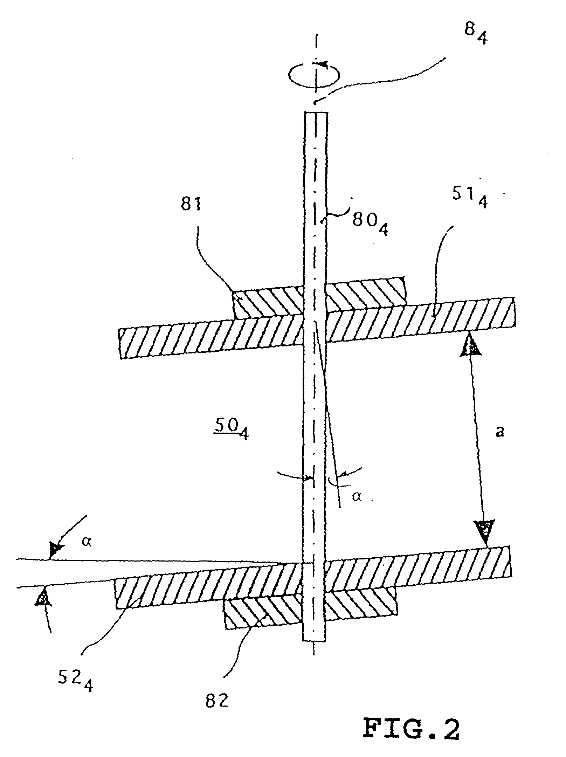

In Fig.2 ist schematisch und im Detail eine bevorzugte Ausführung einer gegenüber der Spiegeleinheit 50₃ der Fig.1 modifizierten Spiegeleinheit 50₄ dargestellt. In Fig.2 ist in beiden Planspiegeln 51₄ und 52₄ der Spiegeleinheit 50₄ jeweils eine zentrische Bohrung vorgesehen, welche um den Winkel α gegen die Senkrechte auf die Spiegelflächen der beiden Planspiegel 51₄ und 52₄ der Spiegeleinheit 50₄ geneigt ist. Durch diese Bohrungen ist jeweils eine Antriebswelle 80₄ mit einer gestrichelt angedeuteten Drehachse 8₄ geführt. Die Antriebswelle 80₄ ist mittels zweier Flansche 81 und 82 fest mit Außenflächen der beiden Planspiegel 51₄ und 52₄ verbunden. Mit Hilfe der Flansche 81 und 82 sind die einander gegenüberliegenden Spiegelflächen der beiden Planspiegel 51₄ und 52₄ in einem Abstand a voneinander angeordnet, welcher unter Berücksichtigung der Abmessungen der üblichen Elemente entsprechend einstellbar ist.

Mittels eines nicht näher dargestellten Antriebsmotors ist die Welle 80₄ und damit die Spiegeleinheit 50₄ in Drehung versetzbar. Strahlteiler 1, die Spiegeleinheit 50₄ und die Planspiegel 71₃ und 72₃ sind so dimensioniert und angeordnet, daß die zu ihren optischen Achsen konzentrischen Strahlenbündel 10' und 10" (siehe Fig.1) das Interferometer in jeder Drehstellung der Spiegeleinheit 50₄ unbehindert von der Drehwelle 80₄ durchlaufen, oder anders ausgedrückt, die Strahlenbündel 10' und 10" verlaufen nur innerhalb einer Hälfte der Spiegeleinheit 50₄, wenn dieses durch eine Ebene, in welcher auch die Drehachse 8₄ liegt, in zwei Hälften geteilt wird.

In diesem Fall werden dann die Strahlengänge der beiden Strahlenbündel-Hälften im Betrieb nicht unterbrochen. Somit kann die zweite Hälfte der Spiegeleinheit, welche bei der beschriebenen Ausführungsform nicht genutzt wird, mit einer zweiten Anordnung aus den übrigen Komponenten 1, 3, 4 und 71₃, 72₃ zu einem zweiten Interferometer ergänzt werden, welches beispielsweise als Referenz-Interferometer dienen kann oder auch für einen anderen Spektralbereich ausgelegt werden kann.

In Abänderung der vorstehend anhand von Fig.2 beschriebenen Ausführungsform kann die zweite Hälfte der Spiegeleinheit 50₄ auch für einen nochmaligen Durchgang der beiden Strahlenbündel-Hälften 10' und 10" genutzt werden. In diesem Fall sind dann die Planspiegel 71₃ und 72₃ im Unterschied zu der Darstellung in Fig.1 auf der Seite des Strahlteilers 1 gegenüber der zweiten Hälfte der Spiegeleinheit angeordnet. An der in Fig.1 wiedergegebenen Position der Planspiegel 71₃, 72₃ werden dann entweder zwei Planspiegel oder ein Dachkant-Innenspiegel derart angeordnet, daß die beiden Strahlenbündel 10' und 10" zu den - nunmehr auf der Seite des Strahlteilers 1 angeordneten - Planspiegel 71₃ und 72₃ gelenkt werden, auf welche sie dann ebenfalls wieder senkrecht auftreffen. Die beiden Strahlenbündel-Hälften 10' und 10" treffen auf diesem Weg je zweimal auf die Spiegel 51₃ und 52₃ auf. Von den - auf der Seite des Strahlteilers 1 angeordneten - Planspiegeln 71₃ und 72₃ durchlaufen dann die Strahlenbündel den vorstehend beschriebenen Weg wieder zurück zum Strahlteiler, wobei sie wiederum zweimal die Spiegeleinheit 50₄ kreuzen. Auf die vorstehend beschriebene Weise kann die mit der fünften Ausführungsform nach Fig.2 erreichbare, optische Wegdifferenz verdoppelt werden.

In einer weiteren möglichen Ausführungsform könnte ein doppelt so breites Strahlenbündel über die Mitte der in Fig.2 dargestellten Spiegeleinheit 50₄ laufen. Aus diesem Strahlenbündel würde dann die Antriebswelle 80₄ einen ihrer Breite entsprechenden Teil ausblenden, d.h. die beiden Strahlenbündel-Hälften entsprechend abschatten. Auf diese Weise könnte jedoch mehr Strahlungsleistung bei gleichen geometrischen Abmessungen zum Detektor 4 (Fig.1) gelangen, oder bei gleicher Strahlungsleistung kann ein geometrisch kleinerer Aufbau als nach Fig.2 erreicht werden. Die Antriebswelle 80₃ ist selbstverständlich möglichst dünn auszulegen, um den Gesamtaufbau klein bzw. die vorstehend beschriebene Ausblendung der Strahlung durch die Antriebswelle 80₃ möglichst gering zu halten.

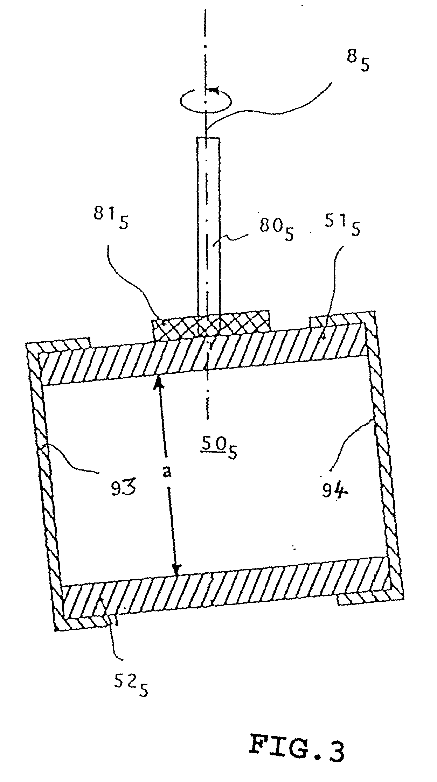

In Fig.3 ist wiederum nur schematisch der Aufbau noch einer weiteren bevorzugten Ausführung eines gegenüber der Ausführungsform der Fig.1 modifizierten Spiegeleinheitaufbaus dargestellt. In Fig.3 sind die beiden Planspiegel 51₅ und 52₅ einer Spiegeleinheit 50₅ durch zwei U-förmige, die Außenseiten der beiden Planspiegel 51₅ und 52₅ umgreifende Halteelemente 93 und 94 in dem vorgesehenen Abstand a parallel zueinander angeordnet und fest miteinander verbunden. Durch die beiden U-förmigen Halteelemente 93 und 94 ist somit nicht nur gewährleistet, daß ein Abstand a zwischen den beiden Planspiegeln 51₅ und 52₅ der Spiegeleinheit 50₅ eingehalten ist, sondern daß auch die beiden Planspiegel 51₅ und 52₅ die unbedingt erforderliche Parallelität zueinander aufweisen.

Die Spiegeleinheit 50₅ ist konzentrisch auf der Rückseite eines der beiden Planspiegel 51₅ oder 52₅ (in Fig.3 auf der Rückseite des Planspiegels 51₅) mittels eines Flansches 81₅ fest mit einer Drehwelle 80₅ verbunden, deren Drehachse wiederum mit der in Fig.3 nicht eingetragenen Drehachse des Spiegelelements zusammenfällt. Auch in Fig.3 schließt die Antriebswelle 80" mit einem Lot auf die Spiegelflächen der beiden Planspiegel 51₅ und 52₅ der Spiegeleinheit 50₅ einen kleinen, in Fig.3 nicht eingetragenen Winkel α ein. Die Antriebswelle 80₅ ist durch einen nicht dargestellten Motor in Rotation versetzbar, was, wie auch in Fig.2 durch einen oberhalb der Antriebswelle 80₅ eingetragenen, die Drehbewegung andeutenden Pfeil angezeigt ist.

Die U-förmigen Halteelemente 93 und 94 sind so dimensioniert und am Umfang der Planspiegel 51₅ und 52₅ auf deren Rückseiten befestigt, daß trotz der durch die Haltelemente 93 und 94 bewirkten Abschattung des Strahlengangs bei einer Rotation des Spiegelelements 50₅ zweimal mindestens je 120° pro Umdrehung von 360° für einen unbehinderten Betrieb zur Verfügung stehen. Der restliche Winkelbereich von jeweils zweimal etwa 60° des Strahlengangs ist durch die Halteteile 93 und 94 abgedeckt.

Die Weglängen durch die beiden Interferometerarme werden mittels der - nur in Fig.1 dargestellten - Planspiegel 71₃ und 72₃ so eingestellt und zueinander koordiniert, daß aus dem Verlauf der in ihrer Geschwindigkeit sinusförmig modulierten Wegänderung die für die Messung nutzbaren Segmente von zweimal 120° symmetrisch zu beiden Seiten des Wendepunktes einer Sinuskurve, also in deren nahezu linearen Bereich liegen, so daß dadurch mindestens etwa 87% der gesamten optischen Wegdifferenz einer Umdrehung von 360° für die Messung genutzt werden, was etwa 67% der für eine Umdrehung zur Verfügung stehenden Meßzeit entspricht.

Nachstehend werden Zahlenbeispiele für die Dimensionierung der wichtigsten Parameter der vierten bis sechsten Ausführungsformen angegeben:

| | | |
|---|---|---|
| Durchmesser der Spiegeleinheit 50₃, 50₄ bzw. 50₅ | | 280mm |
| Abstand a | | 150mm |
| Winkel α | | ± 4,5° |
| Nutzbarer Durchmesser des Strahlenbündels | | 50mm |
| Erzielbarer maximaler Wegunterschied | etwa | 133mm |
| Wegunterschied bei Ausnutzung von 120° | etwa | 115mm |

Für eine Ausführungsform mit einer geringeren Wegdifferenz können die Elemente etwa folgendermaßen dimensioniert sein:

| | | |
|---|---|---|
| Durchmesser der Spiegeleinheit 50₃, 50₄ bzw. 50₅ | | 110mm |
| Abstand a | | 55mm |
| Winkel α | | ±2,5° |
| Nutzbarer Durchmesser des Strahlenbündels | | 25,4mm |
| Erzielbarer maximaler Wegunterschied | etwa | 27.1mm |
| Wegunterschied bei Ausnutzung von 120° | etwa | 23,5mm |

Durch die Erfindung sind somit drei Ausführungsformen von Interferometern mit einer rotierenden Spiegeleinheit geschaffen, bei welchen mit Hilfe weniger optischer Komponenten eine hohe spektrale Auflösung erreicht ist. Obendrein sind die verwendeten Komponenten einfach ausgeführt und daher kostengünstig. Zusätzlich ermöglicht die geringe Anzahl der benötigten Komponenten eine einfache optische Justierung, so daß damit die Anfälligkeit bezüglich einer Dejustierung äußerst gering einzustufen ist.

## Patentansprüche

1. Interferometer nach Michelson mit
- einem Strahlteiler (1),
- einem fokussierenden optischen Element (3)
- einem Detektor (4) zum Erfassen der Signalstrahlung,
- einer durch eine Antriebseinheit in Rotation versetzbaren Spiegeleinheit, welche zwei zueinander parallele und in einem vorgegebenen Abstand voneinander angeordnete Spiegelflächen aufweist, und über welche zur Weglängenänderung beide am Strahlteiler (1) gebildeten Strahlenbündel geleitet werden,
- einem dritten und einem vierten feststehenden Planspiegel (71₃, 72₃), die auf verschiedenen Seiten einer in Verlängerung der Mittenebene des Strahlteiler (1) liegenden Ebene senkrecht zu den vom Strahlteiler (1) kommenden Strahlenbündel angeordnet sind,
- einem Laser als Strahlungsquelle und
- einem Laserdetektor,
dadurch **gekennzeichnet**, daß
die Spiegelflächen der Spiegeleinheit (50₃; 50₄; 50₅;) kreis- oder ellipsenförmige Planspiegel (51₃, 52₃; 51₄, 52₄; 51₅, 52₅) gleichen Durchmessers sind und fest in einem bestimmten, einstellbaren Abstand (a) miteinander verbunden sind;
bezüglich der Spiegeleinheit-Mittenebene der Strahlteiler (1) auf einer Seite und die dritten und vierten Planspiegel (71₃, 72₃) auf der anderen Seite der Spiegeleinheit (50₃; 50₄; 50₅) derart angeordnet sind, daß die Strahlteilerebene zwischen den Planspiegeln (51₃, 52₃; 51₄, 52₄; 51₅, 52₅) der Spiegeleinheit (50₃; 50₄; 50₅ ) verläuft und den Winkel zwischen dem dritten und dem vierten Planspiegel (71₃, 72₃) halbiert;
daß die Planspiegel-Oberflächen der Spiegeleinheit (50₃; 50₄; 50₅) um einen kleinen Winkel (α) gegenüber der Senkrechten auf eine Drehachse (8₃; 8₄; 8₅;) der Spiegeleinheit (50₃; 50₄; 50₅) geneigt sind, und
die Drehachse (8₃; 8₄; 8₅) der Spiegeleinheit (50₃; 50₄; 50₅) mit derjenigen einer Antriebswelle (80₃: 80₄; 80₅) zusammenfällt, welche fest mit der Außenseite eines der beiden Planspiegel (51₃,52₃; 51₄,52₄; 51₅,52₅)) der Spiegeleinheit (50₃; 50₄; 50₅) verbunden ist, und durch einen Motor mit konstanter Winkelgeschwindigkeit antreibbar ist, so daß ein eintretendes Strahlenbündel (10) vom Strahlteiler (1) in zwei Hälften gleicher Intensität geteilt wird, die Strahlenbündel-Hälften auf je einen der beiden Planspiegel (51₃, 51₄, 51₅ bzw. 52₃, 52₄, 52₅) der Spiegeleinheit (50₃; 50₄; 50₅) auftreffen, zu dem jeweils gegenüberliegende Planspiegel (52₃, 52₄, 52₅ bzw. 51₃, 51₄, 51₅) und von dort schließlich zu den dritten und vierten Planspiegeln (71₃, 72₃) so reflektiert werden, daß sie auf diese (71₃, 72₃) senkrecht auftreffen, von dort den beschriebenen Weg in umgekehrter Richtung durchlaufen, an dem Strahlteiler (1) rekombinieren und über die Sammellinse (3) zu dem Detektor (4) geleitet werden, wobei die Wegdifferenz durch die Größen, nämlich Winkel (α) und Abstand (a), einstellbar ist.

2. Interferometer nach Anspruch 1, dadurch **gekennzeichnet**, daß die beiden um den Winkel (α)gegenüber der Senkrechten auf die Drehachse (8₄) geneigten Planspiegel (51₄, 52₄) der Spiegeleinheit (50₄) jeweils mit einer zentrischen Bohrung versehen sind, durch welche die Antriebswelle (80₄) geführt ist, die über zwei Flansche (81, 82) jeweils fest mit den Außenseiten der beiden Planspiegel (51₄, 52₄) verbunden ist, und daß der Durchmesser eines eintretenden Strahlenbündels (10), der Strahlteiler (1), die Spiegeleinheit (50₄) und die dritten und vierten Planspiegel (71₃, 72₃) so dimensioniert und angeordnet sind, daß die zu ihren optischen Achsen konzentrischen Strahlenbündel (10', 10") in jeder Drehstellung nur eine Hälfte der Spiegeleinheit (50₄), unbehindert von der Antriebswelle (80₄), durchlaufen.

3. Interferometer nach Anspruch 2, dadurch **gekennzeichnet**, daß der Durchmesser des eintretenden Strahlenbündels (10), der Strahlteiler (1), die Spiegeleeinheit (50₄) und die dritten und vierten Planspiegel (71₃, 72₃) so dimensioniert und angeordnet sind, daß die aus dem eintretenden Strahlenbündel (10) hervorgehenden, zu ihren optischen Achsen konzentrischen Strahlenbündel (10', 10") die Anordnung so durchlaufen, daß die optischen Achsen der Strahlenbündel-Hälften (10', 10") mit der Drehachse (8₄) eine Ebene bilden und somit die Antriebswelle (80₄) nur einen zentralen Teil des Strahlenbündels abschirmt.

4. Interferometer nach Anspruch 1, dadurch **gekennzeichnet**, daß die beiden Planspiegel (51₅, 52₅) der Spiegeleinheit ( 50₅) mit zwei U-förmigen umgreifenden Halteelementen (93, 94) auf einander gegenüberliegenden Seiten im Abstand (a) parallel zueinander fixiert sind,
daß an der Rückseite eines der beiden Planspiegel (51₅, 52₅) der Spiegeleinheit (50₅) über einen Flansch (81₅) konzentrisch eine Antriebswelle (80₅) befestigt ist, deren Achse (8₅) mit den Senkrechten auf die Spiegelflächen der Planspiegel (51₅, 52₅) den kleinen Winkel (α) einschließt, und
die U-förmigen Halteelemente (93, 94) so dimensioniert sind, daß trotz der durch die Halteelemente (93,94) hervorgerufenen Abschattung des Strahlengangs bei Rotation des Spiegelelements (2) zweimal mindestens je 120° pro Umdrehung für einen unbehinderten Betrieb zur Verfügung stehen,
so daß die in dem Interferometer mittels der dritten und vierten Planspiegel (71₃, 72₃) eingestellten Weglängen zueinander so koordiniert sind, daß aus dem Verlauf der sinusförmig modulierten Wegänderung die für die Messung nutzbaren Segmente von zweimal 120° symmetrisch zu beiden Seiten des Wendepunkts der Sinuskurve und somit in deren nahezu linearen Bereich liegen,
so daß dadurch etwa 87% der gesamten optischen Differenz und etwa 67% der gesamten Zeit einer Umdrehung für eine Messung nutzbar sind.

## Claims

1. A Michelson interferometer, having
- a beam splitter (1),
- a focusing optical element (3),
- a detector (4) for detecting the signal radiation,
- a mirror unit which can be set into rotation by a drive unit and has two mutually parallel mirror surfaces, facing one another at a predetermined distance of plane mirrors, by way of which both beams formed at the beam splitter (1) can be directed in order to change the path length,
- a third and a forth plane mirror (71₃, 72₃), which are disposed on different, opposed sides of a plane which is located in the extension of the center plane of the beam splitter (1) plane and at right angle to the beams arriving from the beam splitter (1),
- a laser as a radiation source, and
- a laser detector,
characterized in that
the mirror surfaces of the mirror unit (50₃; 50₄; 50₅) are circular or elliptical plan mirrors (51₃, 52₃, 51₄, 52₄, 51₅, 52₅), have the same diameter, and are secured to one another at an adjustable spacing (a) ;
with respect to the center plane of the mirror element, the beam splitter (1) is disposed on one side and the third and forth plan mirrors (71₃, 72₃) are disposed on the other side of the mirror unit (50₃; 50₄; 50₅) in such a way that the beam splitter plane is located between the plane mirrors (51₃, 52₃, 51₄, 52₄, 51₅, 52₅) of the mirror unit (50₃; 50₄; 50₅) and bisects the angle formed by third and fourth plane mirrors (71₃, 72₃);
the surfaces of the plane mirror unit (50₃; 50₄; 50₅) are inclined by a small angle (α) relative to the vertical to the axis of rotation (8₃; 8₄; 8₅) of the mirror unit (50₃; 50₄; 50₅), and
the axis of rotation (8₃; 8₄; 8₅) of the mirror unit (50₃; 50₄; 50₅) coincides with that of a drive shaft (80₃; 80₄; 80₅), which is secured to the outside of one of the two plane mirrors (52₃; 52₄; 52₅ and 51₃; 51₄; 51₅, respectively) of the mirror unit (50₃; 50₄; 50₅), and which is drivable by a motor at a constant angular speed, so that an incident beam (10) is divided by the beam splitter (1) into two halves of equal intensity, each of the beam halves strike one of the two plane mirrors (51₃; 51₄; 51₅ and 52₃, 52₄, 52₅, respectively), are reflected to the respectively opposed plane mirror (52₃, 52₄, 52₅, and 51₃; 51₄; 51₅ respectively) and from there finally to the third and fourth mirrors (71₃, 72₃), in such a way that they strike these mirrors (71₃, 72₃) vertically, from there travel the path described in the reverse direction, are recombined at the beam splitter (1), and are carried to the detector (4) via the focusing lens (3), the path difference being adjustable by means of the magnitudes of the angle (α) and spacing (a).

2. Interferometer according to claim 1, characterized in that the two plane mirrors (51₄, 52₄) of the mirror unit (50₄) are each provided with a central bore, through which the drive shaft (80₄) is guided, which shaft is secured via two flanges (81, 82) to the respective outer faces of the mirrors (51₄, 52₄) in such a way that the plane mirrors (51₄, 52₄) are inclined by the angle (α) relative to the vertical to the axis of rotation (8₄), and the diameter of the incident beam (10), the beam splitter (1), the mirror element (50₄), and third and fourth mirrors (71₃, 72₃) are dimensioned and disposed in such a way that the beams (10', 10"), which are concentric to their optical axis, in each rotational position pass through only half of the mirror unit (50₄) unhindered by the drive shaft (80₄).

3. Interferometer according to claim 2, characterized in that the diameter of the incident beam (10), the beam splitter (1), the mirror unit (50₄), and the third and fourth plane mirrors (71₃, 72₃) are dimensioned and disposed such that the beams (10', 10"), which are concentric to their optical axes and originate from the incident beam (10), travel through the arrangement in such a way that the optical axes of the beam halves (10', 10") form a plane with the axis of rotation (8₄), and the drive shaft (80₄) as a result shields only a central portion of the beam.

4. Interferometer according to claim 1, characterized in that the two plane mirrors (51₅, 52₅) of the mirror unit (50₅) are fixed parallel to one another at the distance (a) on opposed sides with two U-shaped retaining elements (93, 94) encompassing them,
concentrically with the back side of one of the two plane mirrors (51₅, 52₅) of the mirror unit (50₅), a drive shaft (80₅) is secured via a flange (81₅), the axis of rotation (85) of the drive shaft forming the small angle (α) with the vertical to the mirror faces of the plane mirrors (51₅, 52₅), and
the U-shaped retaining elements (93, 94) are dimensioned such that despite the shading of the beam effected by the retaining elements (93, 94) upon rotation of the mirror unit (50₅) an angle of at least 120° each is available twice per revolution for unhindered operation,
so that the path length, established in the interferometer by means of the third and fourth plane mirrors (71₃, 72₃), are coordinated with one another such that from the course of the sinusoidally modulated path change, the segments usable for the measurement, of twice 120°, are located symmetrically to both sides of the turning point of the sinusoidal curve and thus in the virtually linear region thereof,
so that as a result approximately 87% of the entire optical difference and approximately 67% of the entire time of one revolution are usable for a measurement.

## Revendications

1. Interféromètre de Michelson comportant
un séparateur de rayons (1),
- un élément optique focalisant (3),
un détecteur (4) pour la saisie du rayonnement des signaux,
une unité de miroir déplaçable en rotation au moyen d'une unité de commande ou d'entraînement qui comporte deux faces de miroir parallèles entre elles et disposées selon un espacement prédéterminé entre elles et par lesquelles sont guidés deux faisceaux de rayons formés sur le séparateur de rayons (1) pour la modification du trajet optique,
un troisième et un quatrième miroirs plans fixes (71₃, 72₃) qui sont agencés sur les différents côtés d'un plan situé dans le prolongement du plan médian du séparateur de rayons (1), perpendiculairement aux faisceaux de rayons provenant du séparateur de rayons (1),
- un laser comme source de rayonnement et
- un détecteur de laser,
caractérisé en ce que,
les faces de miroir de l'unité de miroir (50₃; 50₄; 50₅;) sont des miroirs plans ellipsoïdaux ou circulaires ( 51₃, 52₃; 51₄, 52₄; 51₅, 52₅) de même diamètre et qui sont reliés solidement entre eux selon un espacement déterminé, réglable (a); par rapport au plan médian de l'unité de miroir, le séparateur de rayons (1) sur un côté et les troisième et quatrième miroirs plans (71₃, 72₃) sur l'autre côté de l'unité miroir (50₃; 50₄ ; 50₅) sont disposés de telle sorte que le plan du séparateur de rayons passe entre les miroirs plans (51₃, 52₃, 51_{4,} 52₄;; 51₅,52₅) de l'unité de miroir (50₃ ; 50₄ ; 50₅ ) et bissecte l'angle entre le troisième et le quatrième miroir plan 71₃, 72₃);
en ce que les surfaces des miroirs plans de l'unité de miroir (50₃; 50₄;50₅) sont inclinées selon un petit angle (α) par rapport à la perpendiculaire sur un axe de rotation (8₃; 8₄; 8₅) de l'unité de miroir (50₃; 50₄; 50₅), et
l'axe de rotation (8₃; 8₄; 8₅) de l'unité de miroir ( 50₃; 50₄; 50₅) coïncide avec celui de l'arbre de commande (80₃; 80₄; 80₅) qui est solidement relié avec le côté extérieur de l'un des deux miroirs plans (51₃,52₃;51₄;51₅,52₅) de l'unité de miroir (50₃;50₄;50₅) et peut être entraîné par un moteur à vitesse angulaire constante, de telle sorte qu' un faisceau de rayons entrant (10) en provenance du séparateur de rayons (1) est divisé en deux moitiés de même intensité, les moitiés de faisceaux de rayons viennent chaque fois en incidence sur l'un des deux miroirs plans (51₃,51₄,51₅ ou 52₃,52₄,52₅) de l'unité de miroir (50₃;50₄;50₅), au miroir plan respectivement opposé (52₃, 52₄,52₅ ou 51₃, 51₄,51₅) et de là, enfin, sont réfléchies au troisième et quatrième miroirs plans 71₃, 72₃) de sorte qu'elles viennent en incidence perpendiculairement à ceux-ci (71₃, 72₃) et de là, parcourent le trajet décrit dans le sens inverse, se combinent de nouveau au séparateur de rayons (1) et sont dirigées par la lentille de convergence (3) au détecteur (4), la différence de trajet pouvant être ajustée par les variables telles que notamment l'angle (α) et la distance (a).

2. Interféromètre selon la revendication 1, caractérisé en ce que les deux miroirs plans (51₄,52₄) de l'unité de miroir (50₄) inclinés selon l'angle (α) par rapport à la perpendiculaire sur l'axe de rotation (8₄) sont respectivement munis d'un alésage central à travers lequel est mené l'arbre de commande (80₄) qui est relié par deux brides (81,82) respectivement solidement aux côtés extérieurs des deux miroirs plans (51₄ ,52₄) et en ce que le diamètre d'un faisceau de rayons entrant (10), le séparateur de rayons (1), l'unité de miroir (50₄) et les troisième et quatrième miroirs plans (71₃,72₃) sont dimensionnés et disposés de telle sorte que les faisceaux de rayons (10', 10") concentriques à leurs axes optiques ne traversent dans chaque position de rotation qu'une moitié de l'unité de miroir (50₄), sans être gênés par l'arbre de commande (80₄).

3. Interféromètre selon la revendication 2, caractérisé en ce que le diamètre du faisceau de rayons entrant (10), le séparateur de rayons (1), l'unité de miroir (50₄) et les troisième et quatrième miroirs plans (71₃,72₃) sont dimensionnés et disposés de telle sorte que les faisceaux de rayons (10',10") provenant du faisceau de rayons entrant (10) concentriques par rapport à leurs axes optiques traversent l'agencement de telle sorte que les axes optiques des moitiés de faisceaux de rayons (10',10") forment un plan avec leur axe de rotation (80₄) et de ce fait, l'arbre de commande (80₄) ne fait écran que sur une partie centrale du faisceau de rayons.

4. Interféromètre selon la revendication 1, caractérisé en ce que les deux miroirs plans (51₅, 52₅) de l'unité de miroir (50₅) sont fixés parallèlement entre eux sur chacun des côtés opposés entre eux à une certaine distance (a) au moyen de deux éléments enveloppants en forme de U (93,94),
en ce que sur le côté arrière de l'un des deux miroirs plans (51₅,52₅) de l'unité de miroir (50₅) est assujetti un arbre de commande (80₅) concentriquement par l'intermédiaire d'une bride ( 81₅), arbre de commande dont l'axe (8₅) avec les perpendiculaires sur les faces de miroir du miroir plan (51₅,52₅) inscrit le petit angle (α), et en ce que
les éléments de retenue en forme de U (93,94) sont dimensionnés de telle sorte qu'en dépit de l'ombrage de la marche des rayons provoqué par les éléments de retenue (93,94) lors de la rotation de l'élément de miroir (2) , ils sont disponibles deux fois au moins par rotation de 120° pour une exploitation non gênée,
de sorte que les trajets optiques ajustés dans l'interféromètre au moyen des troisième et quatrième miroirs plans (71₃,72₃) sont coordonnés de telle sorte qu'à partir du tracé de la modification de trajet optique modulée sinusoïdalement les segments utilisables pour la mesure se situent deux fois 120° symétriquement par rapport aux deux côtés du point de retour ou d'inflexion de la courbe sinusoïdale et se trouvent ainsi dans leur domaine pratiquement linéaire de sorte que de cette manière environ 87% de la différence optique totale et environ 67% de la durée totale d'une rotation pourront être utilisés pour une mesure.
